(19) Europäisches Patentamt
European Patent Office
Office européen des brevets

(11) **EP 4 369 472 A1**

(12) **EUROPEAN PATENT APPLICATION**
published in accordance with Art. 153(4) EPC

(43) Date of publication:
**15.05.2024  Bulletin 2024/20**

(21) Application number: **22941991.6**

(22) Date of filing: **18.05.2022**

(51) International Patent Classification (IPC):
***H01M 10/44*** *(2006.01)*

(52) Cooperative Patent Classification (CPC):
**H01M 10/44**

(86) International application number:
**PCT/CN2022/093435**

(87) International publication number:
**WO 2023/220949 (23.11.2023 Gazette 2023/47)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Contemporary Amperex Technology
Co., Limited
Ningde, Fujian 352100 (CN)**

(72) Inventors:
• **WANG, Danfeng
  Ningde, Fujian 352100 (CN)**
• **SONG, Jinyang
  Ningde, Fujian 352100 (CN)**

(74) Representative: **Thoma, Michael
Lorenz Seidler Gossel
Rechtsanwälte Patentanwälte
Partnerschaft mbB
Widenmayerstraße 23
80538 München (DE)**

(54) **BATTERY SWAPPING METHOD, SYSTEM AND APPARATUS, STORAGE MEDIUM, AND COMPUTER PROGRAM PRODUCT**

(57)  Embodiments of this application provide a battery swap method, system, and apparatus, a storage medium, and a computer program product. The battery swap method includes: obtaining (S 110) impedance parameters of battery packs, where the battery packs include a reference battery pack and a plurality of candidate battery packs; obtaining (S120) impedance differences between the reference battery pack and the plurality of candidate battery packs based on the impedance parameters; selecting (S130) M target battery packs based on the impedance differences, where M is a positive integer and the candidate battery packs include the target battery packs; and setting (S 140) the target battery packs and the reference battery pack as swapped-in battery packs. This application can alleviate the problem of a high risk of an overcurrent branch loop when at least two battery packs are present in an electric device.

FIG. 1

Description

TECHNICAL FIELD

This application relates to the field of new energy technologies, and in particular, to a battery swap method, system, and apparatus, a storage medium, and a computer program product.

BACKGROUND

With the development of new energy technology, electric devices that use battery packs as energy source are gradually occupying the market. Such an electric device may be configured with at least two built-in battery packs, but this configuration tends to cause branch loops during the use of the battery packs, resulting in a risk of overcurrent in a particular branch of the electric device.

SUMMARY

Embodiments of this application provide a battery swap method, system, and apparatus, a storage medium, and a computer program product to alleviate the problem that the presence of at least two battery packs in an electric device tends to cause branch loops, resulting in a risk of an overcurrent branch in the electric device.

According to a first aspect, this application provides a battery swap method. The battery swap method may include:

obtaining impedance parameters of battery packs, where the battery packs may include a reference battery pack and a plurality of candidate battery packs;
obtaining impedance differences between the reference battery pack and the plurality of candidate battery packs based on the impedance parameters;
selecting M target battery packs based on the impedance differences, where M is a positive integer and the candidate battery packs include target battery packs; and
setting the target battery packs and the reference battery pack as swapped-in battery packs.

In the embodiments of this application, impedance parameters of battery packs are obtained, and then based on the impedance parameters, impedance differences between a reference battery pack and a plurality of candidate battery packs are obtained. Then, M target battery packs are selected and the target battery packs and the reference battery pack are set as swapped-in battery packs. Here, the target battery packs are selected based on the impedance differences, and the impedance differences are calculated based on the impedance parameters of the reference battery pack and the candidate battery packs, and therefore selection of the final swapped-in battery packs takes into account degrees of impedance differences between the reference battery pack and the candidate battery packs. Such a selective battery swap method allows for good uniformity between the selected target battery packs and the reference battery pack, thus alleviating the problem of a high risk of an overcurrent branch loop when at least two battery packs are present in an electric device.

Optionally, the obtaining impedance parameters of battery packs may include:

obtaining a first parameter and a plurality of second parameters, where the first parameter is an impedance parameter of the reference battery pack under a target temperature and a target state of charge, and the second parameters are impedance parameters of the candidate battery packs under the target temperature and the target state of charge.

In these embodiments, with the target temperatures and target states of charge defined, impedance parameters in the same temperature condition and same state of charge condition are used in subsequent calculation of impedance differences. This ensures uniformity of external environments of the battery packs in impedance difference calculation and improves the accuracy of impedance difference calculation.

Optionally, the obtaining impedance differences between the reference battery pack and the plurality of candidate battery packs based on the impedance parameters may include:

calculating parameter deviation values between the first parameter and each of the plurality of second parameters under different target temperatures and different target states of charge; and
obtaining impedance differences between the reference battery pack and the plurality of candidate battery packs based on the parameter deviation values between the first parameter and each of the plurality of second parameters under different target temperatures and different target states of charge.

In these embodiments, operating conditions of the battery packs under various conditions are taken into account, so the calculated impedance differences more accurately reflect matching degrees of the battery packs.

Optionally, the obtaining impedance differences between the reference battery pack and the plurality of candidate battery packs based on the parameter deviation values between the first parameter and each of the plurality of second parameters under different target temperatures and different target states of charge, may include:

performing a numerical operation on the parameter deviations between each of the plurality of second parameters and the first parameter under all target states of charge and all target temperatures to obtain a plurality of impedance differences, where the plurality of impedance differences correspond to the plurality of candidate battery packs, and the numerical operation is a sum-of-squares operation, a mean operation, or a maximum value operation.

In these embodiments, via the numerical operation, levels of internal resistance differences between the candidate battery packs and the reference battery pack under different operating conditions or in the case of a maximum difference are reflected, so that the candidate battery packs finally selected based on the impedance differences can also enable maximized use of the power of battery cells in the batteries and mitigate the risk of a possible overcurrent loop.

Optionally, the target battery packs are M of N candidate battery packs having smallest impedance differences from the reference battery pack, N being greater than or equal to M.

In these embodiments, M target battery packs with smaller impedance differences are selected and then, together with the reference battery pack, are used as swapped-in battery packs. This can ensure that the impedance differences between swapped-in battery packs used in an electric device are small enough, and therefore the battery packs have highly uniform internal resistances and thus a high matching degree. This reduces the risk of a possible overcurrent loop during the operation of the electric device, maximizing the use of designed power of the battery packs and helping to increase the time length of battery usage. When the electric device is a type of transportation means, such as a vehicle, this improves driving safety and user experience.

Optionally, before the obtaining impedance parameters of battery packs, the method may further include:

> obtaining operating condition data of the battery pack, where the operating condition data may include temperatures, states of charge, actual currents, and actual voltages of a plurality of cells in the battery pack in a target time period;
> processing the actual voltages and actual currents of the plurality of cells in the target time period to obtain current-voltage fitting parameters and goodness-of-fit values of the plurality of cells in the target time period, where the goodness-of-fit values characterize degrees of linear dependence between the actual currents and actual voltages of the cells in the target time period and degrees of deviation of fitted voltages of the cells from the actual voltages of the cells in the target time period;
> selecting, from the plurality of cells, a cell with a goodness-of-fit value greater than a preset threshold as a target cell; and
> calculating an impedance parameter of the battery pack in which the target cell resides and a target temperature and target state of charge corresponding to the impedance parameter, based on current-voltage fitting parameters, temperatures, and states of charge of the target cell in the target time period.

In these embodiments, the actual currents and voltages of the cells are calculated, the current-voltage fitting parameters and goodness-of-fit values are calculated, and finally the current-voltage fitting parameters, temperatures and states of charge of the target cells with high goodness-of-fit values are selected, allowing for calculation of overall data of the battery pack. This provides a favorable basis for obtaining impedance parameters in a subsequent battery swap. The process of selecting target cells based on goodness-of-fit values enables the final calculated impedance parameters to reflect more truly the internal resistances of battery packs and improves the accuracy of data.

Optionally, the obtaining operating condition data of the battery pack includes:

> obtaining actual currents of the plurality of cells in the battery pack in different time periods;
> using a time period in which the actual currents of the cells show a unidirectional change trend as the target time period; and
> obtaining actual voltages, temperatures, and states of charge of the plurality of cells in the target time period.

In these embodiments, a strong linear relationship exists between the current and voltage in the time period where a unidirectional change trend is presented, so their fitted parameters are closer to the true impedance levels of the cells.

Optionally, the processing the actual voltages and actual currents of the plurality of cells in the target time period to obtain current-voltage fitting parameters and goodness-of-fit values of the plurality of cells in the target time period may include:

> performing linear fitting on the actual voltages and actual currents of the plurality of cells in the target time period to obtain linear fitting functions of the plurality of cells in the target time period, where slopes of the linear fitting functions are the current-voltage fitting parameters;
> correspondingly substituting the actual currents of the plurality of cells in the target time period into the linear fitting functions of the plurality of cells in the target time period for calculation to obtain fitted voltages of the plurality of cells in different target time periods; and
> calculating the goodness-of-fit values of the plurality of cells in the target time period based on the fitted voltages and actual voltages of the plurality of cells in the target time period.

In these embodiments, the process of obtaining goodness-of-fit values and current-voltage fitting parameters is given. This provides a data basis for selecting suitable target cells and calculating impedance parameters of the battery packs.

Optionally, the calculating the goodness-of-fit values of the plurality of cells in the target time period based on the fitted voltages and actual voltages of the plurality of cells in the target time period may include:

substituting the fitted voltages and actual voltages of the plurality of cells in the target time period into the following equation to obtain the goodness-of-fit values of the plurality of cells in the target time period respectively:

$$R^2 = \sum (U_{n,1} - U_{mean})^2 / \sum (U_{n,2} - U_{mean})^2$$

where $U_{n,1}$ is a fitted voltage of cell $n$ in the target time period; $U_{n,2}$ is an actual voltage of cell $n$ in the target time period; $U_{mean}$ is a mean value of the fitted voltages and actual voltages in the target time period; and $R^2$ is a goodness-of-fit value of cell $n$ in the target time period.

In these embodiments, through the calculation of differences between fitted voltages and actual voltages of multiple cells, degrees of linear dependence between actual currents and actual voltages can be well assessed and degrees of deviation of fitted voltages from actual voltages are also characterized.

Optionally, the calculating an impedance parameter of the battery pack in which the target cell resides and a target temperature and target state of charge corresponding to the impedance parameter, based on current-voltage fitting parameters, temperatures, and states of charge of the target cell in the target time period may include:

calculating a first mean value of current-voltage fitting parameters of a plurality of target cells in the battery pack in the same target time period, where the first mean value is the impedance parameter of the battery pack in which the target cell resides; calculating a second mean value of temperatures of a plurality of target cells in the battery pack in the same target time period, where the second mean value is the target temperature of the battery pack in which the target cell resides; and calculating a third mean value of states of charge of a plurality of target cells in the battery pack in the same target time period, where the third mean value is the target state of charge of the battery pack in which the target cell resides.

In these embodiments, based on mean values of the data of a plurality of target cells in the same target time period, the data of the entire battery pack in the target time period is measured, enabling the overall operation status of cells in the battery pack to be assessed in accordance with actual data requirements.

Optionally, the plurality of candidate battery packs are located in a battery swap station, and the reference battery pack is at least one battery pack in the battery swap station other than the candidate battery packs or a battery pack in a device with a battery pack to be swapped other than the battery pack to be swapped.

In these embodiments, different setup scenarios of the reference battery pack are given, providing a scenario support for accurate selection of target battery packs to prevent the risk of an overcurrent loop in the device with a batter pack to be swapped.

Optionally, when the reference battery pack is a battery pack in a device with a battery pack to be swapped other than the battery pack to be swapped, M is a quantity of the battery packs to be swapped; and when the reference battery pack is at least one battery pack in the battery swap station other than the candidate battery packs, a sum of M and a quantity of the reference battery packs is equal to a quantity of the battery packs to be swapped.

In these embodiments, suitable quantities of target battery packs are found based on different battery swap scenarios, and accurate selection is achieved.

According to another aspect, this application provides a battery swap system, and the battery swap system may include:

a first acquisition module configured to obtain impedance parameters of battery packs, where the battery packs include a reference battery pack and a plurality of candidate battery packs; a second acquisition module configured to obtain impedance differences between the reference battery pack and the plurality of candidate battery packs based on the impedance parameters; a selection module configured to select M target battery packs based on the impedance differences, where M is a positive integer, and the candidate battery packs include the target battery packs; and a setting module configured to set the target battery packs and the reference battery pack as swapped-in battery packs.

According to still another aspect, this application provides a battery swap apparatus. The battery swap apparatus may include a processor, a memory, and a program or instructions stored on the memory and capable of running on the processor. When the program or instructions are executed by the processor, the steps of the battery swap method according to the above aspects are implemented.

According to yet another aspect, this application further provides a battery swap apparatus. The battery swap apparatus is configured to perform the steps of the battery swap method according to the above aspects.

According to yet another aspect, this application further provides a readable storage medium. The readable storage medium stores a program or instructions, and when the program or instructions are executed by a processor, the steps of the battery swap method according to the above aspects are implemented.

The above description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

## BRIEF DESCRIPTION OF DRAWINGS

To describe the technical solutions of the embodiments of this application more clearly, the following briefly describes the accompanying drawings required for describing the embodiments of this application. Apparently, the accompanying drawings described below show merely some embodiments of this application, and persons of ordinary skill in the art may still derive other drawings from the accompanying drawings without creative efforts.

FIG. 1 is a schematic flowchart of an embodiment of a battery swap method of embodiments of this application.

FIG. 2 is a schematic flowchart of another embodiment of the battery swap method of embodiments of this application.

FIG. 3 is a schematic diagram of still another embodiment of the battery swap method of embodiments of this application.

FIG. 4 is a schematic flowchart of yet another embodiment of the battery swap method of embodiments of this application.

FIG. 5 is a schematic flowchart of yet another embodiment of the battery swap method of embodiments of this application.

FIG. 6 is a schematic flowchart of yet another embodiment of the battery swap method of embodiments of this application.

FIG. 7 is a detailed schematic diagram of a further embodiment of the battery swap method of embodiments of this application, where actual voltages and actual currents of a plurality of cells in a target time period are processed to obtain current-voltage fitting parameters and goodness-of-fit values of the plurality of cells in the target time period.

FIG. 8 is a schematic diagram of optional modules of an embodiment of a battery swap system of embodiments of this application.

FIG. 9 is a schematic diagram of a hardware structure of a battery swap apparatus of embodiments of this application.

The accompanying drawings are not drawn to scale.

## DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of the embodiments of this application, the terms "first", "second" and the like are merely intended to distinguish between different objects, and shall not be understood as any indication or implication of relative importance or any implicit indication of the quantity, sequence or primary-secondary relationship of the technical features indicated. In the description of this application, "a plurality of" means at least two unless otherwise specifically stated.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "perpendicular", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the apparatuses or components mentioned must have specific orientations or must be constructed or manipulated according to specific orientations, and therefore shall not be construed as any limitations on embodiments of this application.

In the description of the embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or electrical connection, and may refer to a direct connection, an indirect connection via an intermediate medium, or an interaction between two elements. Persons of ordinary skill in the art can understand specific meanings of these terms in this application as appropriate to specific situations.

In the new energy field, a traction battery may be used as a major traction source for an electric device such as a vehicle, a ship, or a spacecraft, and an energy storage battery may be a charging source for the electric device. The importance of traction batteries and energy storage batteries is undoubted. As examples rather than limitations, in some application scenarios, the traction battery may be a battery in an electric device, and the energy storage battery may be a battery in a charging device. For ease of description, the traction battery and the energy storage battery may be collectively referred to as batteries below.

As described in the background technology, with the development of new energy technology, there are more and more devices that use batteries as energy carriers. For example, the device may be electric vehicles, spacecrafts, and so on. However, in such devices that use batteries as energy carriers, if internal resistances of battery packs are not the same, a reverse charging loop tends to occur in a branch circuit where a battery pack with a smaller internal resistance resides, leading to a risk of overcurrent in that branch circuit. In addition, a battery pack with a smaller internal resistance discharges quickly, causing the actual discharge capacity of a power system where the battery pack resides to be lower than the demarcated capacity. As a result, the time length of use of the device is also affected.

The following description takes the scenario where the electric device is an electric vehicle as an example. For example, the electric vehicle may have at least two battery packs. As the at least two battery packs configured in the electric vehicle may vary greatly in internal resistance, a reverse charging loop tends to occur in the electric vehicle during driving or parking, causing a risk of overcurrent in a particular branch of the electric vehicle and affecting the safety in the use of the vehicle. In addition, a battery pack with a smaller internal resistance discharges quickly, causing the use time of the electric vehicle to be shorter than expected and a poor user experience. Therefore, in the field of vehicles or transportation tools similar to electric vehicles, related technologies suffer from problems of low driving safety and poor user experiences due to reverse-charging loops.

In order to solve the above problems, the inventor of this application designs a battery swap algorithm based on battery swap scenarios of devices in which battery packs reside. Impedance parameters of battery packs are obtained by analysis. Based on the impedance parameters, impedance differences are calculated. Thus, target battery packs are selected from multiple candidate battery packs based on the impedance differences. Then, the target battery packs, together with a reference battery pack, are used as swapped-in battery packs. In this way, a battery swap is implemented. Here, the swapped-in battery packs are selected based on impedance deviations. The swapped-in battery packs selected according to this battery swap method have a high degree of matching, which can reduce differences between internal resistances, and thereby reduce the risk of overcurrent caused by a reverse-charging loop. As a result, the safety of the use of an electric device is improved and the usage time of the device is also prolonged indirectly.

The following describes the battery swap method, system, and apparatus, storage medium, and computer program product provided in embodiments of this application. The battery swap method provided in embodiments of this application is first described below.

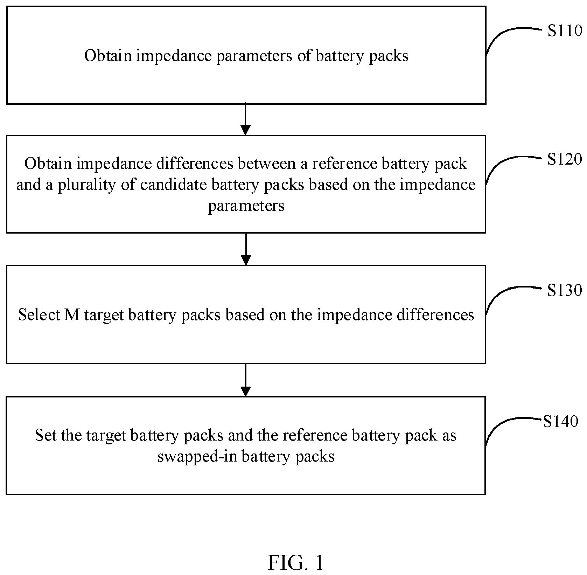

Refer to FIG. 1. FIG. 1 illustrates a schematic flowchart of an optional embodiment of a battery swap method of embodiments of this application. In this embodiment, the battery swap method may include the following steps:

S110: Obtain impedance parameters of battery packs, where the battery packs may include a reference battery pack and a plurality of candidate battery packs.

S 120: Obtain impedance differences between the reference battery pack and the plurality of candidate battery packs based on the impedance parameters.

S130: Select M target battery packs based on the impedance differences, where M is a positive integer and the candidate battery packs may include the target battery packs.

S 140: Set the target battery packs and the reference battery pack as swapped-in battery packs.

It should be noted that the battery swap method of this application may be applied to a control system in a battery swap station, certain battery packs involved in a battery swap, a BMS (Battery Management System, battery management system) in certain battery packs involved in a battery swap process, other control modules with control and computing functions in certain battery packs involved in a battery swap process, or a battery swap system consisting of a battery swap station and battery packs.

The above battery packs may include a reference battery pack and candidate battery packs corresponding to the reference battery pack. The reference battery pack may be a battery pack that is matched against as a reference object in subsequent calculations of impedance differences. The reference battery pack may be provided according to the upper limit of the quantity of battery packs that the electric device can carry and may be one or more.

The candidate battery pack may be provided in plurality. The candidate battery packs may be provided, for example, in a battery swap station or a maintenance plant. The above candidate battery packs constitute a candidate set of target battery packs. The above impedance parameter is a parameter that can characterize the relative magnitude of the internal resistances of a battery pack, which can characterize the internal resistance of the battery pack and may be the internal resistance or a multiple of the internal resistance of the battery pack.

It should be noted that there are various setup scenarios for battery packs involved in embodiments of this application. The battery packs may be set up in a battery swap station for being charged, or set up in an electric device, for example, in an electric vehicle; therefore, a cell parameter table can be defined for each battery pack. The cell parameter table can record all operation conditions data of the battery pack in different setup scenarios. When it comes to a battery swap scenario and target battery packs need to be selected from multiple candidate battery packs by using the reference battery pack as the reference object, the data recorded in the respective cell parameter tables of the reference battery pack and a plurality of candidate battery packs can be transmitted and pooled through a communication protocol. Finally, an execution carrier of the battery swap method can collect and obtain impedance parameters of the reference battery pack and the plurality of candidate battery packs.

On the basis of impedance parameters corresponding to the reference battery pack and the plurality of candidate battery packs, respectively, impedance differences between individual candidate battery packs and the reference battery pack can be calculated. The impedance difference can characterize the degree of difference between internal resistances of battery packs, able to reflect the uniformity of the battery packs. For example, an impedance difference can be obtained by calculating the value of the difference between an impedance parameter of the reference battery pack and an impedance parameter of a candidate battery pack under the same or similar target conditions.

In some optional examples, in S130 above, M target battery packs can be selected from the candidate battery packs by using impedance differences between different candidate battery packs and the reference battery pack as a selection criterion. Finally, the target battery packs and the reference battery pack are set together as swapped-in battery packs. Since impedance difference is used as a criterion for selecting target battery packs, and the impedance differences are calculated based on impedance parameters with the reference battery pack as a reference, where the reference battery pack is eventually one of the swapped-in battery packs, the impedance differences characterize the degree of uniformity between the swapped-in battery packs. Therefore, based on the battery swap scenario, the degree of impedance difference can be used as the battery swap criterion to select, by matching, battery packs with small impedance differences to be used together in an electric device. This alleviates the problem of large differences between internal resistances of at least two battery packs, which can easily lead to an overcurrent loop. It also improves the safety of the electric device. It also indirectly prolongs the battery consumption time of the electric device and enhances the user experience.

For example, taking a scenario where the electric device is a vehicle and the execution carrier of the battery swap method is a battery swap station as an example, the above reference battery pack may be a battery pack in the battery swap station other than the candidate battery packs or a battery pack in a vehicle other than a battery pack to be swapped. If the reference battery pack is a battery pack in a device other than the battery pack to be swapped, after the vehicle enters the battery swap station, battery packs in the vehicle can be communicatively connected to the battery swap station system so that the battery swap station can obtain impedance parameters of the reference battery pack. Similarly, the battery swap station system can also obtain impedance parameters of a plurality of candidate battery packs among all battery packs in the battery swap station and then calculate impedance differences according to the battery swap method illustrated in FIG. 1 above. Thus, a target battery pack is selected, based on the impedance difference criterion, to replace the battery pack to be swapped in the vehicle. This reduces the risk of generating branch loops in battery packs of the electric vehicle after a battery swap and improves driving safety.

In embodiments of this application, impedance parameters of battery packs are obtained, and then based on the impedance parameters, impedance differences between a reference battery pack and a plurality of candidate battery packs are obtained. Then, M target battery packs are selected and the target battery packs and the reference battery pack are set as swapped-in battery packs. Here, the target battery packs are selected based on the impedance differences, and the impedance differences are calculated based on the impedance parameters of the reference battery pack and the candidate battery packs, and therefore selection of the final swapped-in battery packs takes into account degrees of impedance differences between the reference battery pack and the candidate battery packs. Such a selective battery swap method allows for good uniformity between the selected target battery packs and the reference battery pack, thus alleviating the problem of a high risk of an overcurrent branch loop when at least two battery packs are present in an electric device.

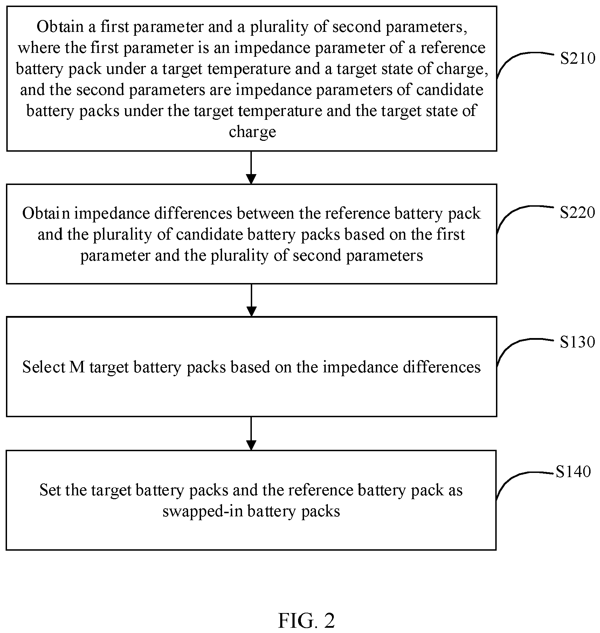

Referring to FIG. 2, based on the above embodiment, another embodiment of the battery swap method of this application is presented. In this embodiment, the method may include:

> S210: Obtain a first parameter and a plurality of second parameters, where the first parameter is an impedance parameter of the reference battery pack under a target temperature and a target state of charge, and the second parameters are impedance parameters of the candidate battery packs under the target temperature and the target state of charge.
> S220: Obtain impedance differences between the reference battery pack and the plurality of candidate battery packs based on the first parameter and the plurality of second parameters.
> S 130: Select M target battery packs based on the impedance differences,
> S 140: Set the target battery packs and the reference battery pack as swapped-in battery packs.

In this embodiment, an impedance parameter has its corresponding target temperature and target state of charge. The above-mentioned battery pack with a cell parameter table is still used as an example. Multiple temperatures and multiple states of charge can be configured in the cell parameter table, thereby forming sites under different temperatures and different states of charge. The value of each site is the impedance parameter under a specific temperature and state of charge recorded in the cell parameter table.

With the target temperatures and target states of charge defined, impedance parameters in the same temperature condition and same state of charge condition are used in subsequent calculation of impedance differences. This ensures uniformity of external environments of the battery packs in impedance difference calculation and improves the accuracy of impedance difference calculation.

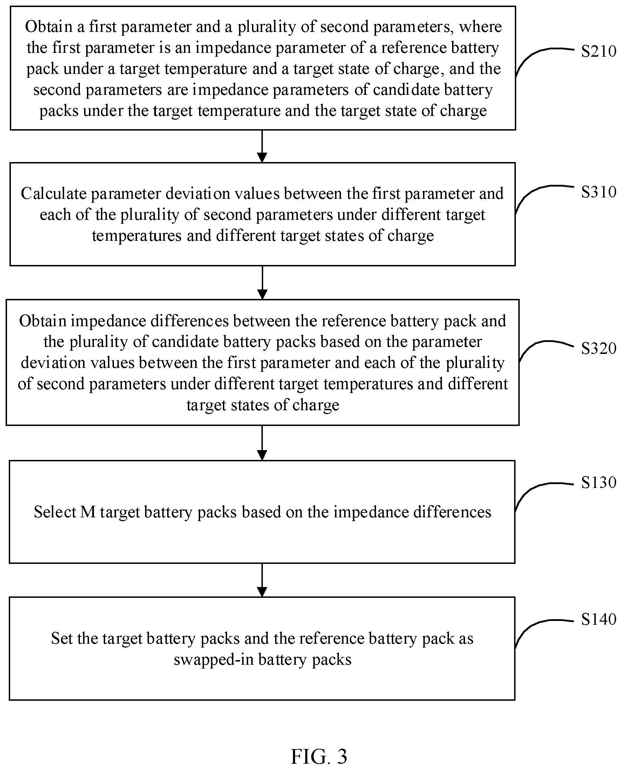

Referring to FIG. 3, based on the above embodiments of this application, still another optional embodiment of the battery swap method of this application is presented. In this embodiment, the above process of obtaining impedance differences between the reference battery pack and the plurality of candidate battery packs based on the impedance parameters may include:

> S310: Calculate parameter deviation values between the first parameter and each of the plurality of second parameters under different target temperatures and different target states of charge.

> S320: Obtain impedance differences between the reference battery pack and the plurality of candidate battery packs based on the parameter deviation values between the first parameter and each of the plurality of second parameters under different target temperatures and different target states of charge.

In this embodiment, parameter deviation values between the first parameter corresponding to the reference battery pack and the second parameters corresponding to the plurality of candidate battery packs can be calculated based on different target temperatures and different target states of charge. Then, impedance differences between the reference battery pack and the plurality of candidate battery packs can be calculated based on the parameter deviation values under different target temperatures and different target states of charge.

For example, a method for calculating the parameter deviation values under different target temperatures and different target states of charge may be to: obtain the first parameter corresponding to the reference battery pack and the second parameters corresponding to the candidate battery packs; group them according to the target temperature and the target state of charge, that is, divide those with the same target temperature and the same target state of charge into one group; and then calculate a difference between the first parameter and the second parameter corresponding to each of the candidate battery packs in the same group. After the differences between the first parameter and the plurality of second parameters of all groups are calculated, the obtained results are the parameter deviation values between the first parameter and the plurality of second parameters under different target temperatures and different target states of charge.

It can be understood that since the impedance differences between the reference battery pack and the candidate battery packs are calculated based on the parameter deviation values under different target temperatures and different target states of charge, meaning operating conditions of the battery packs under various conditions are taken into account, the calculated impedance differences represent more accurately the matching degrees of the battery packs.

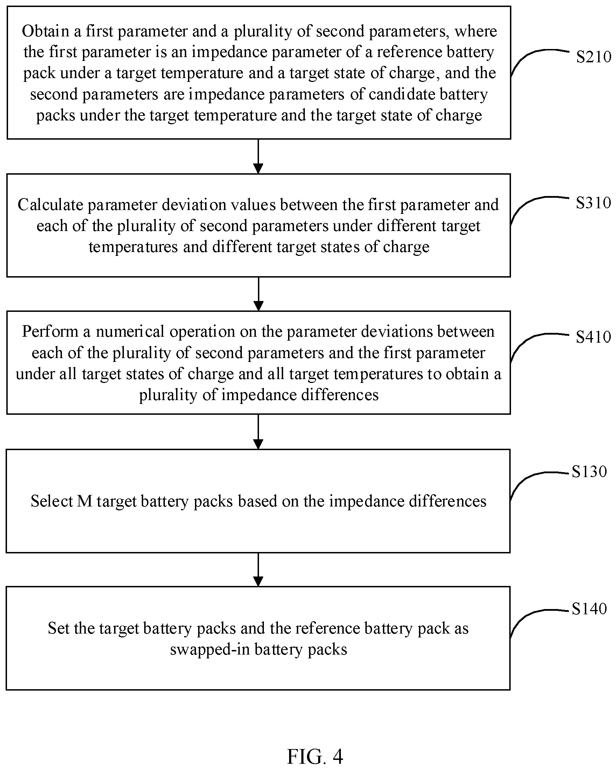

Refer to FIG. 4. FIG. 4 is a schematic flowchart of yet another embodiment of the battery swap method in this application, proposed based on the above embodiment. In this embodiment, the above battery swap method may include:

> S210: Obtain a first parameter and a plurality of second parameters, where the first parameter is an impedance parameter of the reference battery pack under a target temperature and a target state of charge, and the second parameters are impedance parameters of the candidate battery packs under the target temperature and the target state of charge.
> S310: Calculate parameter deviation values between the first parameter and each of the plurality of second parameters under different target temperatures and different target states of charge.

S410: Perform a numerical operation on the parameter deviations between each of the plurality of second parameters and the first parameter under all target states of charge and all target temperatures to obtain a plurality of impedance differences, where the plurality of impedance differences correspond to the plurality of candidate battery packs, and the numerical operation is a sum-of-squares operation, a mean operation, or a maximum value operation.

S 130: Select M target battery packs based on the impedance differences,

S 140: Set the target battery packs and the reference battery pack as swapped-in battery packs.

In this embodiment, an optional implementation is given to calculate impedance differences between the reference battery pack and the plurality of candidate battery packs based on parameter deviation values under different target temperatures and target states of charge.

It should be noted that for a single candidate battery pack, when the impedance differences from the reference battery pack are calculated for that single candidate battery pack for all target states of charge and target temperatures, a sum-of-squares operation or a mean operation can be further performed based on this, and the operation result (that is, the impedance differences) can reflect the level of differences in internal resistance between the candidate battery pack and the reference battery pack under different operating conditions. Alternatively, a maximum value operation can be used, and the result of the operation (that is, the impedance differences) can reflect the maximum degree of difference between the candidate battery pack and the reference battery pack, so that the impedance differences can reflect the degree of difference in internal resistance between the candidate battery pack and the reference battery pack to a greater degree. The candidate battery packs finally selected based on the impedance differences can also enable maximized use of the power of battery cells in the batteries and mitigate the risk of a possible overcurrent loop.

Based on the above embodiment, yet another embodiment of the battery swap method of this application is presented. In this embodiment, the target battery packs are M of N candidate battery packs having smallest impedance differences from the reference battery pack, N being a positive integer greater than or equal to M.

For example, still using the case where the battery packs are in a battery swap station for illustration, assuming that all the battery packs in the battery swap except the reference battery pack are candidate battery packs, after traversing, impedance parameters of all candidate battery packs can be obtained, and then impedance differences between each candidate battery pack and the reference battery pack can be obtained by calculation. Finally, all the impedance differences can be sorted, and the M candidate battery packs with smallest impedance differences can be directly selected, where in this case N=M.

In other examples, influenced by other factors such as the failure conditions of the battery packs and the location of the battery swap station, the N with smallest impedance differences can also be selected, and then the M target battery packs to replace the battery pack to be swapped can be selected from the N candidate battery packs in consideration of the influence of other factors.

It should be noted that, M target battery packs with smaller impedance differences are selected and then, together with the reference battery pack, are used as swapped-in battery packs. This can ensure that the impedance differences between swapped-in battery packs used in an electric device are small enough, and therefore the battery packs have highly uniform internal resistances and thus a high matching degree. This reduces the risk of a possible overcurrent loop during the operation of the electric device, maximizing the use of designed power of the battery packs and helping to increase the time length of battery usage. When the electric device is a type of transportation means, such as a vehicle, this improves driving safety and user experience.

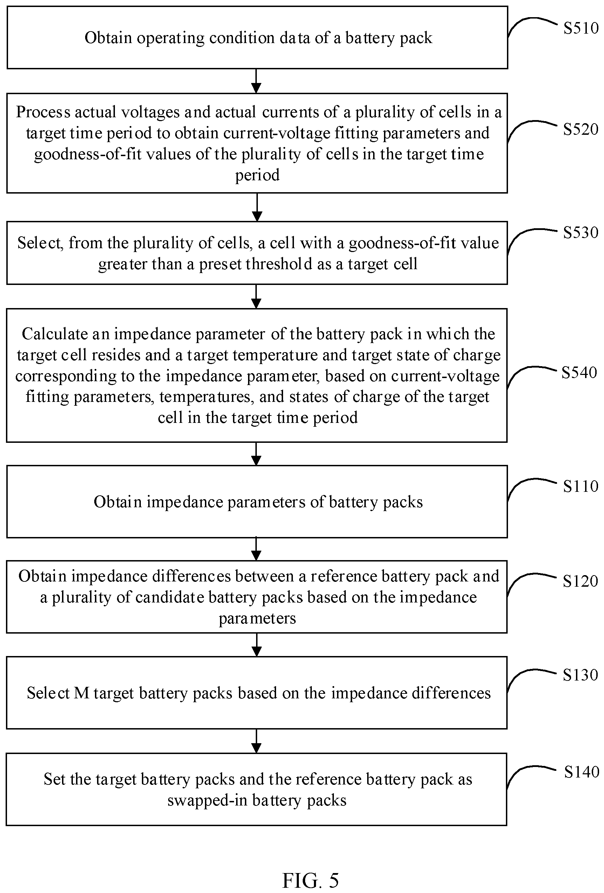

Refer to FIG. 5. FIG. 5 is an optional schematic flowchart of yet another embodiment of the battery swap method of this application, proposed based on the above embodiment. In this embodiment, before the obtaining impedance parameters of battery packs, the method may further include the following steps:

S510: Obtain operating condition data of the battery pack, where the operating condition data may include temperatures, states of charge, actual currents, and actual voltages of a plurality of cells in the battery pack in a target time period.

S520: Process the actual voltages and actual currents of the plurality of cells in the target time period to obtain current-voltage fitting parameters and goodness-of-fit values of the plurality of cells in the target time period, where the goodness-of-fit values characterize degrees of linear dependence between the actual currents and actual voltages of the cells in the target time period and also characterize degrees of deviation of fitted voltages of the cells from the actual voltages of the cells in the target time period.

S530: Select, from the plurality of cells, a cell with a goodness-of-fit value greater than a preset threshold as a target cell.

S540: Calculate an impedance parameter of the battery pack in which the target cell resides and a target temperature and target state of charge corresponding to the impedance parameter, based on current-voltage fitting parameters, temperatures, and states of charge of the target cell in the target time period.

A range of the above operating condition data of the battery pack may cover the entire operation of the battery pack, and may include data of the battery pack in charging and discharging processes and when the battery pack is not in use. For example, a charging process may include a process of charging the battery pack at a battery swap station, and a discharging process may include a process where the battery pack is configured in an electric vehicle so that electrical energy stored in the battery pack is converted to mechanical energy, allowing the electric vehicle to drive and park.

It should be noted that operation condition data of a battery pack can be collected instantaneously by the BMS of the battery pack, and subsequently, the battery pack's operation condition data in the historical time can be acquired by a subject that performs the battery swap method before the battery swap action takes place.

Here, the target time period may be the complete time period of the battery pack, or may be a time period selected by filtering when the battery pack is in a stable state. For example, the target time period may be a time period after a first preset time after a normal start of the battery pack.

In combination with the above target time period selection method, the length of the target time period can be further limited by selecting a time period longer than a preset time period as the target time period. The preset time period can be, for example, 2 seconds, 3 seconds, or 5 seconds.

The operating condition data of the battery pack obtained based on the target time period actually includes temperatures, states of charge, actual currents, and actual voltages of multiple cells in the battery pack. The operating condition of the battery pack can be accurately assessed based on the data of a plurality of cells. The plurality of cells may be all cells in the battery pack or cells obtained by filtering whose operating condition data are in a stable state or in a normal range during the target time period.

The temperature and state of charge of the above cells are not limited and may cover all operating conditions of the cells. For example, the temperature range may be from -30 degrees Celsius to 60 degrees Celsius and the state of charge may be from 0 to 100%.

A current-voltage fitting operation can be performed for each cell based on actual currents and actual voltages of the plurality of cells selected in the battery pack to obtain current-voltage fitting parameters of the plurality of cells in the target time period. It should be noted that the current-voltage fitting parameter is obtained by a fitting operation on the actual current and actual voltage, so the parameter can characterize the relationship between current and voltage of a cell, that is, the parameter represents the internal resistance of the cell.

The fitting method may be, for example, linear fitting. For the case where the actual voltage and actual current change in a curve, the curve may be split into several straight lines and then a linear fitting operation can be performed on each of the straight line. On the basis of the obtained fitting relationship, the goodness-of-fit values can be obtained by combining actual voltages with fitted voltages obtained from the fitting.

Later on, when selecting the cells to be used for evaluating impedance parameters of the battery pack, the goodness-of-fit value being greater than the preset threshold can be set as the criterion. It can be understood that the goodness-of-fit value characterizes the degree of linear dependence between the actual voltage and actual current of a cell. Therefore, a larger the goodness-of-fit value would come with a higher the linear dependence between the actual current and the actual voltage, a smaller deviation between the fitted voltage and the actual voltage, and in turn a fitted parameter closer to the true level of impedance of the cell. As a result, using cells with a goodness-of-fit value greater than a preset threshold as target cells can better reflect real operation status of the cells and exclude some of the cells with abnormal data.

Besides, the above current-voltage fitting parameter is a parameter that can characterize the relationship between the current and voltage of a cell, that is, the parameter represents the internal resistance condition of the cell. Therefore, after target cells are selected, impedance parameters of the battery pack in which the target cells reside can be calculated based on the current-voltage fitting parameters of all the target cells.

In addition, as different impedance parameters are recorded under different operating conditions, based on the foregoing obtained temperatures and states of charge of the cells in the battery pack, the overall target temperatures and target states of charge of the battery pack can also be obtained.

In this embodiment, the current-voltage fitting parameters and goodness-of-fit values are calculated based on actual currents and actual voltages of the cells and eventually the current-voltage fitting parameters, temperatures, and states of charge of target cells with a high goodness-of-fit value are selected, allowing for calculation of all data of the battery pack, which provides a favorable basis for obtaining impedance parameters in the subsequent battery swap. The process of selecting target cells based on goodness-of-fit values enables the final calculated impedance parameters to reflect more truly the internal resistances of battery packs and improves the accuracy of data.

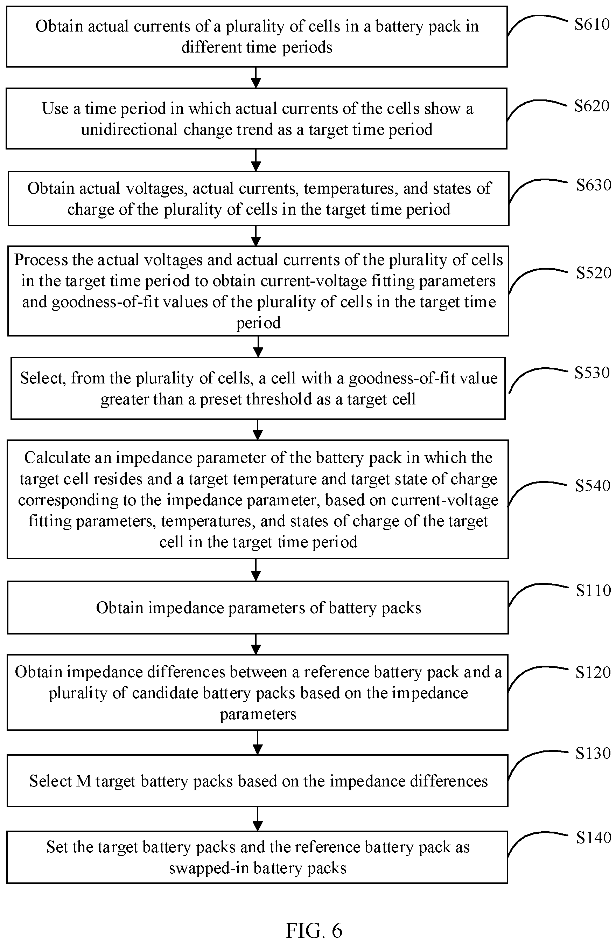

Refer to FIG. 6. FIG. 6 is a schematic flowchart of another embodiment of the battery swap method in this application, proposed based on the above embodiment. In this embodiment, the process of obtaining operation condition data of the battery pack may include:

    S610: Obtain actual currents of the plurality of cells in the battery pack in different time periods.
    S620: Use a time period in which the actual currents of the cells show a unidirectional change trend as the target time period.

S630: Obtain actual voltages, actual currents, temperatures, and states of charge of the plurality of cells in the target time period.

In this embodiment, the target time period is defined as a time period when the actual currents show a unidirectional change trend, which may be a monotonically increasing trend or a monotonically decreasing trend. A strong linear relationship exists between the actual current and voltage in the target time period, so their fitted parameters are closer to the true impedance levels of the cells.

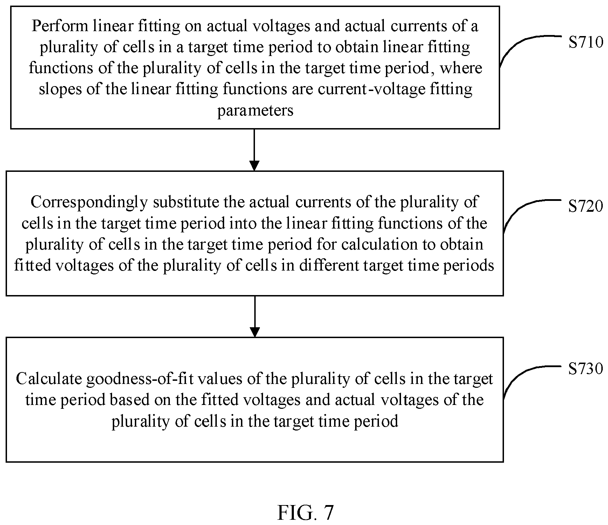

Referring to FIG. 7, yet another embodiment of the battery swap method of this application is proposed based on the above embodiment. In this embodiment, the process of processing actual voltages and actual currents of a plurality of cells in a target time period to obtain current-voltage fitting parameters and goodness-of-fit values of the plurality of cells in the target time period may include:

S710: Perform linear fitting on the actual voltages and actual currents of the plurality of cells in the target time period to obtain linear fitting functions of the plurality of cells in the target time period, where slopes of the linear fitting functions are the current-voltage fitting parameters.

S720: Correspondingly substitute the actual currents of the plurality of cells in the target time period into the linear fitting functions of the plurality of cells in the target time period for calculation to obtain fitted voltages of the plurality of cells in different target time periods.

S730: Calculate the goodness-of-fit values of the plurality of cells in the target time period based on the fitted voltages and actual voltages of the plurality of cells in the target time period.

In this embodiment, current-voltage fitting parameters are obtained by linear fitting, and the goodness-of-fit values corresponding to each of the plurality of cells in the target time period are obtained based on results of the linear fitting (that is, the linear fitting functions) and the actual voltage data.

It should be noted that, the selected target time period is a time period when currents show a unidirectional change trend and current-voltage changes under such operating conditions may show a good linear or nearly linear trend, so a linear fitting function can be obtained by a linear fitting. The slope of the linear fitting function, however, represents a relationship between the current and voltage; therefore, the slope of the linear fitting function can be used as a parameter to evaluate internal resistances of the cells.

For example, assuming that the actual current of a single cell shows a monotonically increasing trend in the time period from T0 to Tn, then, a fitting operation can be performed on the actual current and actual voltage data of that single cell in the time period from T0 to Tn. The fitting relationship satisfies U=k*I+b, where U represents a fitted voltage, I represents an actual current, b represents a constant, and k represents the slope, that is, the current-voltage fitting parameter.

Besides, whether the obtained current-voltage fitting parameters can evaluate the actual internal resistance of a cell affects the error level of impedance parameters of battery packs calculated later. Therefore, the current-voltage fitting parameters can be evaluated by goodness-of-fit values. This can be done by substituting a number of actual currents in the target time period into the linear fitting function to obtain fitted voltages. In combination with actual voltages, degrees of deviation, that is, goodness-of-fit values, between the fitted voltages and the actual voltages are obtained. Based on the goodness-of-fit values, accurate current-voltage fitting parameters can be obtained after selection.

In this embodiment, the process of obtaining goodness-of-fit values and current-voltage fitting parameters is given. This provides a data basis for selecting suitable target cells and calculating impedance parameters of the battery packs.

Yet another embodiment of the battery swap method of this application is proposed based on the foregoing embodiment. In this embodiment, the calculating goodness-of-fit values of the plurality of cells in the target time period based on the fitted voltages and actual voltages of the plurality of cells in the target time period may include:

substituting the fitted voltages and actual voltages of the plurality of cells in the target time period into the following equation to obtain the goodness-of-fit values of the plurality of cells in the target time period respectively:

$$R^2 = \sum (U_{n,1} - U_{mean})^2 / \sum (U_{n,2} - U_{mean})^2$$

where $U_{n,1}$ is a fitted voltage of cell $n$ in the target time period; $U_{n,2}$ is an actual voltage of cell $n$ in the target time period; $U_{mean}$ is a mean value of the fitted voltages and actual voltages in the target time period; and $R^2$ is a goodness-of-fit value of cell $n$ in the target time period.

It should be noted that a goodness-of-fit value can be measured by a dependence factor, which is a statistical metric that can measure the linear dependence between two variables. By calculation of dependence factors of actual currents and actual voltages of a plurality of cells, degrees of linear dependence between the actual currents and the actual voltages can be well evaluated. Therefore, the goodness-of-fit value can well characterize the degrees of linear dependence between current and voltage under an operating condition.

In the above calculation using fitted voltages and actual voltages in the target time period, mean values of the fitted voltages and the actual voltages corresponding to the target time period can be calculated first, and then the mean values, the fitted voltages and the actual voltages in the target time period can be substituted into the above equation to find the goodness-of-fit values of the cells in the target time period.

Of course, in other embodiments, calculation of goodness-of-fit values can also be achieved by other metrics that can characterize the degree of matching, such as standard deviation and variance.

Based on the foregoing embodiment, yet another embodiment of the battery swap method of this application is presented. In this embodiment, the process of calculating an impedance parameter of the battery pack in which the target cell resides and a target temperature and target state of charge corresponding to the impedance parameter, based on current-voltage fitting parameters, temperatures, and states of charge of the target cell in the target time period may include:

calculating a first mean value of current-voltage fitting parameters of a plurality of target cells in the battery pack in the same target time period, where the first mean value is the impedance parameter of the battery pack in which the target cell resides;
calculating a second mean value of temperatures of a plurality of target cells in the battery pack in the same target time period, where the second mean value is the target temperature of the battery pack in which the target cell resides; and
calculating a third mean value of states of charge of a plurality of target cells in the battery pack in the same target time period, where the third mean value is the target state of charge of the battery pack in which the target cell resides.

It should be noted that the above target temperature, impedance parameter, and target state of charge may be calculated simultaneously or sequentially. When executed sequentially, the order of the execution can be adjusted according to actual needs.

In this embodiment, based on mean values of the data of a plurality of target cells in the same target time period, the data of the entire battery pack in the target time period is measured, enabling the overall operation of cells in the battery pack to be assessed in accordance with actual data requirements. In other embodiments, the mean value may not be calculated and median, mode or the like may be used instead to measure the data of the entire battery pack in the target time period.

Based on the above embodiment, yet another embodiment of the battery swap system of this application is proposed. In this embodiment, the plurality of candidate battery packs are located in a battery swap station, and the reference battery pack is at least one battery pack in the battery swap station other than the candidate battery packs or a battery pack in a device with a battery pack to be swapped other than the battery pack to be swapped.

This embodiment provides two different matching scenarios for the reference battery pack. One scenario may be that all battery packs in the device with a battery pack to be swapped (that is, the electric device) need to be swapped. In this case, at least one battery pack may be selected from the battery swap station as the reference battery pack, and then based on the first parameter of the reference battery pack, second parameters of a plurality of candidate battery packs in the battery swap station are traversed to calculate impedance differences between the reference battery pack and the plurality battery packs. Finally, target battery packs with smaller impedance differences are selected based on the impedance differences.

It should be noted that since the target battery packs are selected based on impedance differences, the impedance differences between the target battery packs and the reference battery pack are small, and the final swapped-in battery packs have good uniformity and small differences in internal resistances, thus reducing the risk of an overcurrent loop during operation.

Another scenario is that some of the battery packs in the original device with a battery pack to be swapped are faulty or experience significant power loss. In this case, these battery packs in the device with a battery pack to be swapped may be swapped. In this case, the reference battery pack is a battery pack that does not need to be swapped in the device with a battery pack to be swapped.

In this embodiment, different setup scenarios of the reference battery pack are given, providing a scenario support for accurate selection of target battery packs to prevent the risk of an overcurrent loop in the device with a batter pack to be swapped.

It can be understood that different reference battery pack matching scenarios make the quantity of target battery packs finally selected inconsistent, but the upper limit of battery packs usable by the electronic device is fixed. Therefore, different quantities of target battery packs can be selected accordingly.

That is, when the reference battery pack is a battery pack in a device with a battery pack to be swapped other than the battery pack to be swapped, M may be a quantity of the battery packs to be swapped. When the reference battery pack is at least one battery pack in the battery swap station other than the candidate battery packs, a sum of M and a quantity of the reference battery packs may be equal to a quantity of the battery packs to be swapped. Thus, suitable quantities of target battery packs are found based on different battery swap scenarios, and accurate selection is achieved.

The above FIG. 1 to FIG. 7 describe in detail embodiments of the battery swap method of this application. The following describes the battery swap apparatus of this application.

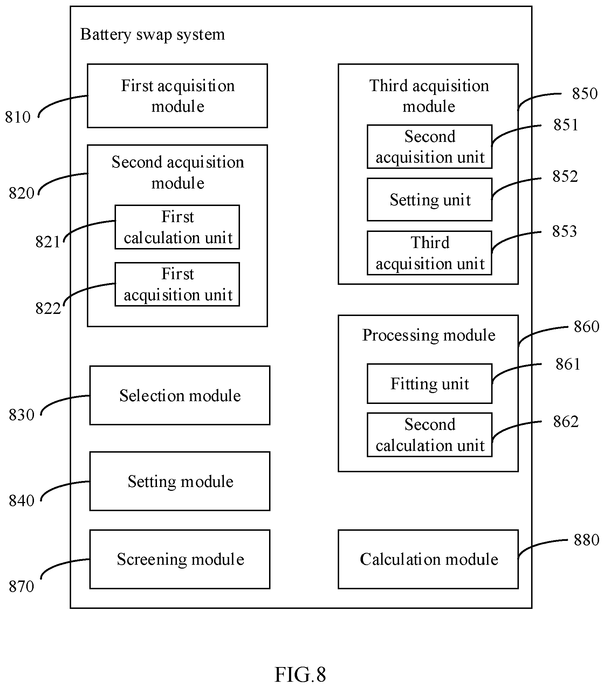

Refer to FIG. 8. In an embodiment of the battery swap system of this application, the battery swap system may include:

a first acquisition module 810 configured to obtain impedance parameters of battery packs, where the battery packs include a reference battery pack and a plurality of candidate battery packs;
a second acquisition module 820 configured to obtain impedance differences between the reference battery pack and the plurality of candidate battery packs based on the impedance parameters;
a selection module 830 configured to select M target battery packs based on the impedance differences, where M is a positive integer, and the candidate battery packs include the target battery packs; and
a setting module 840 configured to set the target battery packs and the reference battery pack as swapped-in battery packs.

Based on the above embodiment, in another embodiment of the battery swap system of this application, the first acquisition module 810 may be configured to obtain a first parameter and a plurality of second parameters, where the first parameter is an impedance parameter of the reference battery pack under a target temperature and a target state of charge, and the second parameters are impedance parameters of the candidate battery packs under the target temperature and the target state of charge.

Based on the above embodiment, in yet another embodiment of the battery swap system of this application, the second acquisition module 820, may include:

a first calculation unit 821 configured to calculate parameter deviation values between the first parameter and each of the plurality of second parameters under different target temperatures and different target states of charge; and
a first acquisition unit 822 configured to obtain impedance differences between the reference battery pack and the plurality of candidate battery packs based on the parameter deviation values between the first parameter and each of the plurality of second parameters under different target temperatures and different target states of charge.

Based on the above embodiment, in yet another embodiment of the battery swap system of this application, the obtaining unit 822 may be used to perform a numerical operation on the parameter deviations between each of the plurality of second parameters and the first parameter under all target states of charge and all target temperatures to obtain a plurality of impedance differences, where the plurality of impedance differences correspond to the plurality of candidate battery packs, and the numerical operation is a sum-of-squares operation, a mean operation, or a maximum value operation.

Based on the above embodiment, in yet another embodiment of the battery swap system of this application, the target battery packs may be M of N candidate battery packs having smallest impedance differences from the reference battery pack, N being greater than or equal to M.

Referring further to FIG. 8, in yet another embodiment of the battery swap system of this application, based on the above embodiment, the battery swap system may further include:

a third acquisition module 850 configured to obtain operating condition data of the battery pack, where the operating condition data may include temperatures, states of charge, actual currents, and actual voltages of a plurality of cells in the battery pack in a target time period;
a processing module 860 configured to process the actual voltages and actual currents of the plurality of cells in the target time period to obtain current-voltage fitting parameters and goodness-of-fit values of the plurality of cells in the target time period, where the goodness-of-fit values characterize degrees of linear dependence between the actual currents and actual voltages of the cells in the target time period and degrees of deviation of fitted voltages of the cells from the actual voltages of the cells in the target time period;
a screening module 870 configured to select, from the plurality of cells, a cell with a goodness-of-fit value greater than a preset threshold as a target cell;
a calculation module 880 configured to calculate impedance parameter of the battery pack in which the target cell resides and a target temperature and target state of charge corresponding to the impedance parameter, based on current-voltage fitting parameters, temperatures, and states of charge of the target cell in the target time period.

Refer further to FIG. 8. Based on the above embodiment, yet another embodiment of the battery swap system of this application is proposed. In this application, the third acquisition module 850 may include:

a second acquisition unit 851 configured to obtain actual currents of the plurality cells in the battery pack in different time periods;
a setting unit 852 configured to use a time period in which the actual currents of the cells show a unidirectional change trend as the target time period; and
a third acquisition unit 853 configured to obtain actual voltages, temperatures, and states of charge of the plurality of cells in the target time period.

Refer further to FIG. 8. Based on the above embodiment, yet another embodiment of the battery swap system of this application is proposed. In this application, the processing module 860 may include:

a fitting unit 861 configured to perform linear fitting on the actual voltages and actual currents of the plurality of cells in the target time period to obtain linear fitting functions of the plurality of cells in the target time period, where slopes of the linear fitting functions are the current-voltage fitting parameters; and a second calculation unit 862 configured to correspondingly substitute the actual currents of the plurality of cells in the target time period into the linear fitting functions of the plurality of cells in the target time period for calculation to obtain fitted voltages of the plurality of cells in different target time periods, and calculate the goodness-of-fit values of the plurality of cells in the target time period based on the fitted voltages and actual voltages of the plurality of cells in the target time period.

Based on the above embodiment, yet another embodiment of the battery swap system of this application is proposed. In this application, the second calculation unit 862 may further substitute the fitted voltages and actual voltages of the plurality of cells in the target time period into the following equation to obtain the goodness-of-fit values of the plurality of cells in the target time period respectively:

$$R^2 = \sum (U_{n,1} - U_{mean})^2 / \sum (U_{n,2} - U_{mean})^2$$

where $U_{n,1}$ is a fitted voltage of cell $n$ in the target time period; $U_{n,2}$ is an actual voltage of cell $n$ in the target time period; $U_{mean}$ is a mean value of the fitted voltages and actual voltages in the target time period; and $R^2$ is a goodness-of-fit value of cell $n$ in the target time period.

Based on the above embodiment, yet another embodiment of the battery swap system of this application is proposed. In this application, the second calculation unit 862 may also be configured to: calculate a first mean value of current-voltage fitting parameters of a plurality of target cells in the battery pack in the same target time period, where the first mean value is the impedance parameter of the battery pack in which the target cell resides; calculate a second mean value of temperatures of a plurality of target cell in the battery pack in the same target time period, where the second mean value is the target temperature of the battery pack in which the target cell resides; and calculate a third mean value of states of charge of a plurality of target cells in the battery pack in the same target time period, where the third mean value is the target state of charge of the battery pack in which the target cell resides.

Based on the above embodiment, yet another embodiment of the battery swap system of this application is proposed. In this embodiment, the plurality of candidate battery packs are located in a battery swap station, and the reference battery pack is at least one battery pack in the battery swap station other than the candidate battery packs or a battery pack in a device with a battery pack to be swapped other than the battery pack to be swapped.

Based on the above embodiment, yet another embodiment of the battery swap system of this application is proposed. In this embodiment, when the reference battery pack is a battery pack in a device with a battery pack to be swapped other than the battery pack to be swapped, M is a quantity of the battery packs to be swapped; when the reference battery pack is at least one battery pack in the battery swap station other than the candidate battery packs, a sum of M and a quantity of the reference battery packs is equal to a quantity of the battery packs to be swapped.

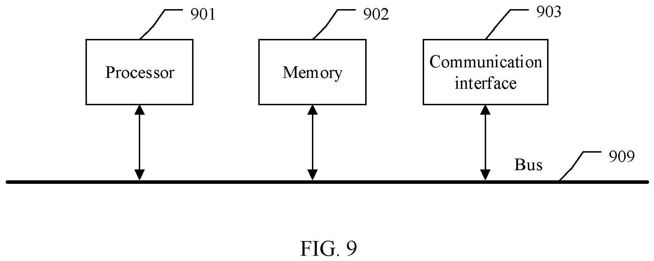

FIG. 9 illustrates a schematic diagram of a hardware structure of the battery swap apparatus provided in embodiments of this application. The battery swap apparatus may include a processor 901 and a memory 902 having computer program instructions stored therein.

Specifically, the processor 901 may include a central processing unit (CPU) or an application specific integrated circuit (Application Specific Integrated Circuit, ASIC), or may be configured as one or more integrated circuits that implement embodiments of this application.

The memory 902 may include a mass storage for data or instructions. By way of example and not limitation, the memory 902 may include a hard disk drive (Hard Disk Drive, HDD), a floppy disk drive, a flash memory, an optical disc, a magnetic disk, a magnetic tape, a universal serial bus (Universal Serial Bus, USB) drive, or a combination of two or more of these. Where appropriate, the memory 902 may include a removable or non-removable (or fixed) medium. Where appropriate, the memory 902 may be internal or external to an integrated gateway disaster recovery device. In particular embodiments, the memory 902 is a non-volatile solid state memory.

In particular embodiments, the memory may include a read-only memory (ROM), a random access memory (RAM), a disk storage media device, an optical storage media device, a flash memory device, and an electrical, optical, or other physical/tangible memory storage devices. Therefore, typically, the memory includes one or more tangible (non-transitory) computer-readable storage media (for example, memory devices) encoded with software containing computer-executable instructions and when the software is executed (for example, by one or more processors), is operable to perform the operations described with reference to the method according to one aspect of this disclosure.

The processor 901 implements any battery swap method of the above embodiments by reading and executing computer program instructions stored in the memory 902.

In one example, the battery swap apparatus may also include a communication interface 903 and a bus 909, where, as shown in FIG. 9, the processor 901, the memory 902, and the communication interface 903 are connected and communicate with each other via the bus 909.

The communication interface 903 is mainly configured to implement communication between modules, apparatuses, units and/or devices in embodiments of this application.

The bus 909 includes hardware, software, or both, coupling components of picture processing devices with each other. By way of example and not limitation, the bus may include an accelerated graphics port (AGP) or other graphics buses, an enhanced industry standard architecture (EISA) bus, a front-end bus (FSB), a hypertransport (HT) interconnect, an industry standard architecture (ISA) bus, an unlimited bandwidth interconnect, a low pin count (LPC) bus, a memory bus, a microchannel architecture (MCA) bus, a peripheral component interconnect (PCI) bus, a PCI-Express (PCI-X) bus, a serial advanced technology attachment (SATA) bus, a video electronics standards association local (VLB) bus, or other suitable buses or combinations of two or more of these. Where appropriate, the bus 909 may include one or more buses. Although specific buses are described and illustrated in embodiments of this application, this application takes any suitable buses or interconnects into account.

The battery swap apparatus may perform the battery swap method in embodiments of this application, thereby implementing the battery swap method described in the above embodiments.

Additionally, for implementation of the battery swap method in the above embodiments, embodiments of this application may provide a computer storage medium. The computer storage medium stores computer program instructions. When the computer program instructions are executed by a processor, any one of the battery swap methods in the above embodiments is implemented.

Additionally, embodiments of this application further provide a computer program product including a computer program. When the computer program is executed by a processor, the steps and corresponding content of the foregoing embodiments are implemented.

Although this application has been described with reference to some preferred embodiments, various modifications to this application and replacements of the components therein with equivalents can be made without departing from the scope of this application. In particular, as long as there is no structural conflict, the various technical features mentioned in the embodiments can be combined in any manner. This application is not limited to the specific embodiments disclosed in this specification but includes all technical solutions falling within the scope of the claims.

**Claims**

1. A battery swap method, wherein the method comprises:

    obtaining impedance parameters of battery packs, wherein the battery packs comprise a reference battery pack and a plurality of candidate battery packs;
    obtaining impedance differences between the reference battery pack and the plurality of candidate battery packs based on the impedance parameters;
    selecting M target battery packs based on the impedance differences, wherein M is a positive integer and the candidate battery packs comprise the target battery packs; and
    setting the target battery packs and the reference battery pack as swapped-in battery packs.

2. The battery swap method according to claim 1, wherein the obtaining impedance parameters of battery packs comprises:
obtaining a first parameter and a plurality of second parameters, wherein the first parameter is an impedance parameter of the reference battery pack under a target temperature and a target state of charge, and the second parameters are impedance parameters of the candidate battery packs under the target temperature and the target state of charge.

3. The battery swap method according to claim 2, wherein the obtaining impedance differences between the reference battery pack and the plurality of candidate battery packs based on the impedance parameters comprises:

    calculating parameter deviation values between the first parameter and each of the plurality of second parameters under different target temperatures and different target states of charge; and
    obtaining impedance differences between the reference battery pack and the plurality of candidate battery packs based on the parameter deviation values between the first parameter and each of the plurality of second parameters under different target temperatures and different target states of charge.

4. The battery swap method according to claim 3, wherein the obtaining impedance differences between the reference battery pack and the plurality of candidate battery packs based on the parameter deviation values between the first parameter and each of the plurality of second parameters under different target temperatures and different target states of charge comprises:
performing a numerical operation on the parameter deviations between each of the plurality of second parameters and the first parameter under all target states of charge and all target temperatures to obtain a plurality of impedance differences, wherein the plurality of impedance differences correspond to the plurality of candidate battery packs, and the numerical operation is a sum-of-squares operation, a mean operation, or a maximum value operation.

5. The battery swap method according to claim 1, wherein the target battery packs are M of N candidate battery packs having smallest impedance differences from the reference battery pack, N being greater than or equal to M.

6. The battery swap method according to claim 1, wherein before the obtaining impedance parameters of battery packs, the method further comprises:

   obtaining operating condition data of the battery pack, wherein the operating condition data comprises temperatures, states of charge, actual currents, and actual voltages of a plurality of cells in the battery pack in a target time period; processing the actual voltages and actual currents of the plurality of cells in the target time period to obtain current-voltage fitting parameters and goodness-of-fit values of the plurality of cells in the target time period, wherein the goodness-of-fit values characterize degrees of linear dependence between the actual currents and actual voltages of the cells in the target time period and degrees of deviation of fitted voltages of the cells from the actual voltages of the cells in the target time period; selecting, from the plurality of cells, a cell with a goodness-of-fit value greater than a preset threshold as a target cell; and calculating an impedance parameter of the battery pack in which the target cell resides and a target temperature and target state of charge corresponding to the impedance parameter, based on current-voltage fitting parameters, temperatures, and states of charge of the target cell in the target time period.

7. The battery swap method according to claim 6, wherein the obtaining operating condition data of the battery pack comprises:

   obtaining actual currents of the plurality of cells in the battery pack in different time periods; using a time period in which the actual currents of the cells show a unidirectional change trend as the target time period; and obtaining actual voltages, temperatures, and states of charge of the plurality of cells in the target time period.

8. The battery swap method according to claim 6, wherein the processing the actual voltages and actual currents of the plurality of cells in the target time period to obtain current-voltage fitting parameters and goodness-of-fit values of the plurality of cells in the target time period comprises:

   performing linear fitting on the actual voltages and actual currents of the plurality of cells in the target time period to obtain linear fitting functions of the plurality of cells in the target time period, wherein slopes of the linear fitting functions are the current-voltage fitting parameters; correspondingly substituting the actual currents of the plurality of cells in the target time period into the linear fitting functions of the plurality of cells in the target time period for calculation to obtain fitted voltages of the plurality of cells in different target time periods; and calculating the goodness-of-fit values of the plurality of cells in the target time period based on the fitted voltages and actual voltages of the plurality of cells in the target time period.

9. The battery swap method according to claim 8, wherein the calculating the goodness-of-fit values of the plurality of cells in the target time period based on the fitted voltages and actual voltages of the plurality of cells in the target time period comprises:

   substituting the fitted voltages and actual voltages of the plurality of cells in the target time period into the following equation to obtain the goodness-of-fit values of the plurality of cells in the target time period respectively:

$$R^2 = \sum (U_{n,1} - U_{mean})^2 / \sum (U_{n,2} - U_{mean})^2$$

   wherein $U_{n,1}$ is a fitted voltage of cell $n$ in the target time period; $U_{n,2}$ is an actual voltage of cell $n$ in the target time period; $U_{mean}$ is a mean value of the fitted voltages and actual voltages in the target time period; and $R^2$ is a goodness-of-fit value of cell $n$ in the target time period.

10. The battery swap method according to claim 6, wherein the calculating an impedance parameter of the battery pack in which the target cell resides and a target temperature and target state of charge corresponding to the impedance parameter, based on current-voltage fitting parameters, temperatures, and states of charge of the target cell in the target time period comprises:

   calculating a first mean value of current-voltage fitting parameters of a plurality of target cells in the battery pack in the same target time period, wherein the first mean value is the impedance parameter of the battery pack in which the target cell resides;

calculating a second mean value of temperatures of a plurality of target cells in the battery pack in the same target time period, wherein the second mean value is the target temperature of the battery pack in which the target cell resides; and

calculating a third mean value of states of charge of a plurality of target cells in the battery pack in the same target time period, wherein the third mean value is the target state of charge of the battery pack in which the target cell resides.

11. The battery swap method according to claim 1, wherein the plurality of candidate battery packs are located in a battery swap station, and the reference battery pack is at least one battery pack in the battery swap station other than the candidate battery packs or a battery pack in a device with a battery pack to be swapped other than the battery pack to be swapped.

12. The battery swap method according to claim 11, wherein when the reference battery pack is a battery pack in a device with a battery pack to be swapped other than the battery pack to be swapped, M is a quantity of the battery packs to be swapped; and when the reference battery pack is at least one battery pack in the battery swap station other than the candidate battery packs, a sum ofM and a quantity of the reference battery packs is equal to a quantity of the battery packs to be swapped.

13. A battery swap system, wherein the battery swap system comprises:

a first acquisition module configured to obtain impedance parameters of battery packs, wherein the battery packs comprise a reference battery pack and a plurality of candidate battery packs;

a second acquisition module configured to obtain impedance differences between the reference battery pack and the plurality of candidate battery packs based on the impedance parameters;

a selection module configured to select M target battery packs based on the impedance differences, wherein M is a positive integer, and the candidate battery packs comprise the target battery packs; and

a setting module configured to set the target battery packs and the reference battery pack as swapped-in battery packs.

14. A battery swap apparatus, comprising a processor, a memory, and a program or instructions stored on the memory and capable of running on the processor, wherein when the program or instructions are executed by the processor, the steps of the battery swap method according to any one of claims 1 to 12 are implemented.

15. A battery swap apparatus, configured to perform the steps of the battery swap method according to any one of claims 1 to 12.

16. A readable storage medium, wherein the readable storage medium stores a program or instructions, and when the program or instructions are executed by a processor, the steps of the battery swap method according to any one of claims 1 to 12 are implemented.

17. A computer program product, wherein the computer program product is executed by a processor to implement the steps of the battery swap method according to any one of claims 1 to 12.

Obtain impedance parameters of battery packs — S110

Obtain impedance differences between a reference battery pack and a plurality of candidate battery packs based on the impedance parameters — S120

Select M target battery packs based on the impedance differences — S130

Set the target battery packs and the reference battery pack as swapped-in battery packs — S140

FIG. 1

Obtain a first parameter and a plurality of second parameters, where the first parameter is an impedance parameter of a reference battery pack under a target temperature and a target state of charge, and the second parameters are impedance parameters of candidate battery packs under the target temperature and the target state of charge — S210

Obtain impedance differences between the reference battery pack and the plurality of candidate battery packs based on the first parameter and the plurality of second parameters — S220

Select M target battery packs based on the impedance differences — S130

Set the target battery packs and the reference battery pack as swapped-in battery packs — S140

FIG. 2

Obtain a first parameter and a plurality of second parameters, where the first parameter is an impedance parameter of a reference battery pack under a target temperature and a target state of charge, and the second parameters are impedance parameters of candidate battery packs under the target temperature and the target state of charge — S210

Calculate parameter deviation values between the first parameter and each of the plurality of second parameters under different target temperatures and different target states of charge — S310

Obtain impedance differences between the reference battery pack and the plurality of candidate battery packs based on the parameter deviation values between the first parameter and each of the plurality of second parameters under different target temperatures and different target states of charge — S320

Select M target battery packs based on the impedance differences — S130

Set the target battery packs and the reference battery pack as swapped-in battery packs — S140

FIG. 3

Obtain a first parameter and a plurality of second parameters, where the first parameter is an impedance parameter of a reference battery pack under a target temperature and a target state of charge, and the second parameters are impedance parameters of candidate battery packs under the target temperature and the target state of charge

S210

Calculate parameter deviation values between the first parameter and each of the plurality of second parameters under different target temperatures and different target states of charge

S310

Perform a numerical operation on the parameter deviations between each of the plurality of second parameters and the first parameter under all target states of charge and all target temperatures to obtain a plurality of impedance differences

S410

Select M target battery packs based on the impedance differences

S130

Set the target battery packs and the reference battery pack as swapped-in battery packs

S140

FIG. 4

Obtain operating condition data of a battery pack — S510

Process actual voltages and actual currents of a plurality of cells in a target time period to obtain current-voltage fitting parameters and goodness-of-fit values of the plurality of cells in the target time period — S520

Select, from the plurality of cells, a cell with a goodness-of-fit value greater than a preset threshold as a target cell — S530

Calculate an impedance parameter of the battery pack in which the target cell resides and a target temperature and target state of charge corresponding to the impedance parameter, based on current-voltage fitting parameters, temperatures, and states of charge of the target cell in the target time period — S540

Obtain impedance parameters of battery packs — S110

Obtain impedance differences between a reference battery pack and a plurality of candidate battery packs based on the impedance parameters — S120

Select M target battery packs based on the impedance differences — S130

Set the target battery packs and the reference battery pack as swapped-in battery packs — S140

FIG. 5

Obtain actual currents of a plurality of cells in a battery pack in different time periods — S610

Use a time period in which actual currents of the cells show a unidirectional change trend as a target time period — S620

Obtain actual voltages, actual currents, temperatures, and states of charge of the plurality of cells in the target time period — S630

Process the actual voltages and actual currents of the plurality of cells in the target time period to obtain current-voltage fitting parameters and goodness-of-fit values of the plurality of cells in the target time period — S520

Select, from the plurality of cells, a cell with a goodness-of-fit value greater than a preset threshold as a target cell — S530

Calculate an impedance parameter of the battery pack in which the target cell resides and a target temperature and target state of charge corresponding to the impedance parameter, based on current-voltage fitting parameters, temperatures, and states of charge of the target cell in the target time period — S540

Obtain impedance parameters of battery packs — S110

Obtain impedance differences between a reference battery pack and a plurality of candidate battery packs based on the impedance parameters — S120

Select M target battery packs based on the impedance differences — S130

Set the target battery packs and the reference battery pack as swapped-in battery packs — S140

FIG. 6

Perform linear fitting on actual voltages and actual currents of a plurality of cells in a target time period to obtain linear fitting functions of the plurality of cells in the target time period, where slopes of the linear fitting functions are current-voltage fitting parameters

S710

Correspondingly substitute the actual currents of the plurality of cells in the target time period into the linear fitting functions of the plurality of cells in the target time period for calculation to obtain fitted voltages of the plurality of cells in different target time periods

S720

Calculate goodness-of-fit values of the plurality of cells in the target time period based on the fitted voltages and actual voltages of the plurality of cells in the target time period

S730

FIG. 7

Battery swap system

First acquisition module — 810

Second acquisition module — 820

First calculation unit — 821

First acquisition unit — 822

Selection module — 830

Setting module — 840

Screening module — 870

Third acquisition module — 850

Second acquisition unit — 851

Setting unit — 852

Third acquisition unit — 853

Processing module — 860

Fitting unit — 861

Second calculation unit — 862

Calculation module — 880

FIG.8

901

902

903

| Processor | Memory | Communication interface |

Bus        909

FIG. 9

<div align="center">**INTERNATIONAL SEARCH REPORT**</div>

| | International application No. |
|---|---|
| | **PCT/CN2022/093435** |

**A.    CLASSIFICATION OF SUBJECT MATTER**

H01M 10/44(2006.01)i

According to International Patent Classification (IPC) or to both national classification and IPC

**B.    FIELDS SEARCHED**

Minimum documentation searched (classification system followed by classification symbols)

H01M10/-;H02J7/-

Documentation searched other than minimum documentation to the extent that such documents are included in the fields searched

Electronic data base consulted during the international search (name of data base and, where practicable, search terms used)

CNABS; CNTXT; VEN; EPTXT; WOTXT; USTXT; CNKI; IEEE: 电池, 阻抗, 温度, 荷电, 拟合, battery, impedance, temperature, SOC, fit

**C.    DOCUMENTS CONSIDERED TO BE RELEVANT**

| Category* | Citation of document, with indication, where appropriate, of the relevant passages | Relevant to claim No. |
|---|---|---|
| X | CN 110504500 A (CHONGQING YUEDA ELECTRIC EQUIPMENT CO., LTD.) 26 November 2019 (2019-11-26)<br>    description, paragraphs 77-131, and figure 1 | 1-5, 11-17 |
| Y | CN 110504500 A (CHONGQING YUEDA ELECTRIC EQUIPMENT CO., LTD.) 26 November 2019 (2019-11-26)<br>    description, paragraphs 77-131, and figure 1 | 6-8, 10 |
| X | CN 111641241 A (BEIJING INSTITUTE OF SPACE LAUNCH TECHNOLOGY) 08 September 2020 (2020-09-08)<br>    description, paragraphs 42-131, and figures 1-2 | 1-5, 11-17 |
| Y | CN 111641241 A (BEIJING INSTITUTE OF SPACE LAUNCH TECHNOLOGY) 08 September 2020 (2020-09-08)<br>    description, paragraphs 42-131, and figures 1-2 | 6-8, 10 |
| Y | WO 2021099102 A1 (DEKRA AUTOMOBIL GMBH) 27 May 2021 (2021-05-27)<br>    description, pages 28-43, and figures 1-14 | 6-8, 10 |
| Y | EP 2821803 A1 (DELPHI TECHNOLOGIES, INC.) 07 January 2015 (2015-01-07)<br>    description, paragraphs 1-46, and figures 1-4 | 6-8, 10 |

☑ Further documents are listed in the continuation of Box C.          ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **09 January 2023** | **17 January 2023** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/093435** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 112904218 A (JIANGSU UNIVERSITY) 04 June 2021 (2021-06-04)<br>entire document | 1-17 |

Form PCT/ISA/210 (second sheet) (January 2015)

**INTERNATIONAL SEARCH REPORT**
Information on patent family members

International application No.

**PCT/CN2022/093435**

| Patent document cited in search report | | | Publication date (day/month/year) | Patent family member(s) | | | Publication date (day/month/year) |
|---|---|---|---|---|---|---|---|
| CN | 110504500 | A | 26 November 2019 | None | | | |
| CN | 111641241 | A | 08 September 2020 | None | | | |
| WO | 2021099102 | A1 | 27 May 2021 | CN | 114786991 | A | 22 July 2022 |
| | | | | AU | 2020385550 | A1 | 16 June 2022 |
| | | | | CA | 3162747 | A1 | 27 May 2021 |
| | | | | KR | 20220100684 | A | 15 July 2022 |
| | | | | EP | 4061668 | A1 | 28 September 2022 |
| EP | 2821803 | A1 | 07 January 2015 | None | | | |
| CN | 112904218 | A | 04 June 2021 | CN | 112904218 | B | 21 December 2021 |
| | | | | US | 2022236335 | A1 | 28 July 2022 |
| | | | | WO | 2022160147 | A1 | 04 August 2022 |

Form PCT/ISA/210 (patent family annex) (January 2015)